Europäisches Patentamt

European Patent Office

Office européen des brevets

(19)

(11) Veröffentlichungsnummer : **0 361 310 B1**

(12) # EUROPÄISCHE PATENTSCHRIFT

(45) Veröffentlichungstag der Patentschrift :
**13.05.92 Patentblatt 92/20**

(51) Int. Cl.$^5$ : **G01N 27/28**

(21) Anmeldenummer : **89117437.7**

(22) Anmeldetag : **21.09.89**

(54) **Messvorrichtung zur Bestimmung der Aktivität oder der Konzentration von Ionen in Lösungen.**

(30) Priorität : **24.09.88 DE 3832528**

(43) Veröffentlichungstag der Anmeldung :
**04.04.90 Patentblatt 90/14**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**EP-A- 0 166 920**
**DE-A- 3 416 956**

(73) Patentinhaber : **Fresenius AG**
**Gluckensteinweg 5**
**W-6380 Bad Homburg v.d.H. (DE)**

(72) Erfinder : **Metzner, Klaus, Dipl.-Phys./Dipl.-Inf.**
**Gladiolenweg 49**
**W-6382 Friedrichsdorf (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

## Beschreibung

Die Erfindung betrifft eine Meßvorrichtung zur Bestimmung der Aktivität oder der Konzentration von Ionen in Lösungen, mit wenigstens einer Meßelektrode und einer Referenzelektrode, die mit einem Durchflußkanal miteinander verbunden sind, der einen ersten Ausgang und einen zweiten Ausgang aufweist, der durch eine Dosierleitung, in die eine erste Pumpe und wenigstens ein Ventil eingeschaltet sind, mit wenigstens einem Kalibrierlösungsbehälter verbunden ist, wobei von der Dosierleitung zwischen der ersten Pumpe und dem Durchflußkanal eine Abflußleitung abzweigt, in die eine zweite Pumpe eingeschaltet ist sowie mit einer mit dem Durchflußkanal verbundenen Probenzuführungsleitung.

Eine derartige Vorrichtung, wie sie aus der DE-OS 3416956 bekannt ist, weist eine Elektrodeneinheit (ionensensitive Elektroden und Bezugselektrode) und einen mit dieser Elektrodeneinheit in Verbindung stehenden Durchflußkanal auf. Der erste Ausgang des Durchflußkanals ist mit der Probenzuführungsleitung versehen, der zweite Ausgang ist über eine erste Leitung mit den Kalibrierlösungsbehältern verbunden. In dieser ersten Leitung befindet sich eine Pumpe, die die Kalibrierlösungen zu der Elektrodeneinheit fördert. Von dieser ersten Leitung zweigt eine Abflußleitung zum Abfallbehälter ab. An den beiden Ausgängen des Durchflußkanals, hinter der ersten Pumpe sowie in der Abflußleitung sind Durchflußsensoren angeordnet, mit denen der Füllzustand der jeweiligen Leitung überprüft wird. Hinter den Kalibrierlösungsbehältern und vor dem Abfallbehälter ist jeweils ein Absperrventil angeordnet. In der Abflußleitung ist eine zweite Pumpe angeordnet, die mit der ersten Pumpe zu einer beidseitig wirkenden Pumpe mit zwei Pumpensegmenten kombiniert ist.

Mit einer derartigen Anordnung wird zunächst die Messung der Probe vorgenommen, an die sich dann die Kalibrierung anschließt. Vor und nach der Kalibrierung müssen die Elektroden gespült werden, um Verfälschungen des Meßergebnisses durch Verschleppung von Proben- bzw. Kalibrierflüssigkeit zu vermeiden.

Für das Spülen des Durchflußkanals wird Kalibrierflüssigkeit von der Pumpe durch den zweiten Ausgang in den Durchflußkanal gepumpt, bis dieser vollständig gefüllt ist. Hierbei können noch Probenreste, die nicht vollständig nach der Messung abgepumpt worden waren, in die Probenzuführungsleitung gedrückt werden und von dort in die Ansaugkapillare gelangen, von wo diese Probenreste in den Probenbehälter zurücktropfen können.

Die Kalibrierflüssigkeit wird nach dem Spülvorgang wieder durch den zweiten Ausgang aus dem Durchflußkanal abgepumpt und über die Abflußleitung dem Abfallbehälter zugeführt. Ein Durchspülen der Probenzuführungsleitung und der Kapillare erfolgt jedoch nicht. Um eine Probenverschleppung zu vermeiden, ist daher vor der nächsten Messung ein Austausch der Probenkapillare erforderlich.

Aufgabe der Erfindung ist es daher, eine Vorrichtung der eingangs beschriebenen Art so weiterzubilden, daß ein Heraustropfen von Probenflüssigkeit aus der Kapillare vermieden wird und daß eine schnellere und intensivere Reinigung des Durchflußkanals möglich ist.

Diese Aufgabe wird mit einer Meßvorrichtung gelöst, die dadurch gekennzeichnet ist, daß von der Abflußleitung vor der zweiten Pumpe eine Verbindungsleitung abzweigt, die im Bereich des ersten Ausgangs in den Durchflußkanal mündet, und daß in dieser Verbindungsleitung ein erstes Ventil und in der Abflußleitung zwischen dem Verzweigungspunkt und der Abzweigung der Verbindungsleitung ein zweites Ventil vorgesehen sind.

Diese beiden Ventile können als ein kombiniertes Ventil ausgeführt sein. Dadurch wird der Einsatz eines zusätzlichen Luftventils möglich, mit dessen Hilfe zur intensiven Reinigung der Elektroden Wasser-Luftsegmente innerhalb der Spülphase erzeugt werden können. Die Anordnung eines derartigen Luftventils ist aus der DE-OS 34 16 959 bekannt.

Das Spül-, Kalibrier- und Meßverfahren mit Hilfe der erfindungsgemäßen Vorrichtung stellt sich nun wie folgt dar :

Die Zuführung der Meßlösung erfolgt durch die Kapillare, die in die Probenflüssigkeit eintaucht. Das Ansaugen der Probe erfolgt mittels der Pumpe, die in der Abflußleitung angeordnet ist. Zunächst bleibt das Ventil in der Abflußleitung geschlossen und das Ventil in der Verbindungsleitung wird kurzzeitig geöffnet. Auf diese Weise strömt Probenflüssigkeit zunächst durch die Kapillare in die Verbindungsleitung und die Kapillare wird auf diese Art und Weise gespült. Anschließend wird das Ventil in der Verbindungsleitung geschlossen und das Ventil in der Abflußleitung geöffnet. Dadurch fließt die Probenflüssigkeit in den Durchflußkanal der Elektrodeneinheit. Nach der Füllung des Kanals erfolgt die Messung der Parameter mit Hilfe der Elektroden und der daran angeschlossenen Auswerteeinheit.

Nach Beendigung der Messung wird die Probenflüssigkeit über die Abflußleitung in den Abfallbehälter abgepumpt.

Anschließend werden die Elektroden mit zwei verschiedenen Flüssigkeiten gespült. Dies erfolgt dadurch, daß bei geschlossenem Ventil in der Abflußleitung und geöffnetem Ventil in der Verbindungsleitung eine erste Kalibrierflüssigkeit mittels der ersten Pumpe durch den Durchflußkanal der Elektrodeneinheiten und von dort über die Kapillare mittels der zweiten Pumpe durch die Verbindungsleitung in die Abflußleitung und in den Abfallbehälter gepumpt wird. Infolge der stärkeren Pumpwirkung der zweiten Pumpe entsteht innerhalb des Kapillaradapters und der Kapillare ein Unterdruck, so daß aus der Kapillare austretende Flüssigkeit sofort abgepumpt wird. Der gleiche Spülvorgang wird anschließend mit einer zweiten Kalibrierlösung durchgeführt. Nach diesem Spülvorgang muß die teilweise noch verunreinigte Kalibrierlösung aus dem Durchflußkanal der Elektrodeneinheit entfernt werden. Dies erfolgt dadurch, daß das Ventil in der Verbindungsleitung geschlossen wird und das Ventil in der Abflußleitung geöffnet wird. Durch die beidseitig wirkende Pumpe wird die Kalibrierlösung nur noch bis zum Verzweigungspunkt gepumpt. Gleichzeitig wird durch das Pumpensegment in der Abflußleitung die zugeführte Kalibrierlösung durch die Abflußleitung abgepumpt, wodurch im Durchflußkanal der Elektrodeneinheit ein Unterdruck entsteht, der dazu führt, daß die darin befindliche Flüssigkeit abgesaugt wird. Während des Abpumpens der in dem Durchflußkanal befindlichen Flüssigkeit strömt Luft durch die Probenkapillare nach.

Wenn in der Vorrichtung zusätzlich ein Luftventil in der Dosierleitung vorgesehen ist, dann besteht auch die Möglichkeit, die Kalibrierflüssigkeit über die Verbindungsleitung abzusaugen, weil dann Luft über die Dosierleitung nachströmen kann. Durch die in den Durchflußkanal gepumpte Luft wird die noch vorhandene Flüssigkeit in den Kapillaradapter geschoben und über die Verbindungsleitung abgepumpt.

Das anschließende Befüllen des Durchflußkanals der Elektrodeneinhet mit saüberer Kalibrierflüssigkeit erfolgt dann bei geschlossenem Ventil in der Abflußleitung und bei geöffnetem Ventil in der Verbindungsleitung. Die Förderung der Kalibrierlösung erfolgt so lange, bis der Durchflußkanal in der Meßvorrichtung vollständig gefüllt ist. Anschließend wird die Pumpe abgeschaltet und die Messung der Kalibrierflüssigkeit durchgeführt.

Das Absaugen der Kalibrierflüssigkeit erfolgt dann wieder bei eingeschalteter Pumpe und geöffnetem Ventil in der Abflußleitung und geschlossenem Ventil in der Verbindungsleitung. Danach erfolgt wiederum ein Spülvorgang sowie die Zuführung einer weiteren Kalibrierflüssigkeit. Messen und Abpumpen erfolgt dann wieder auf die gleiche Art und Weise.

Die erfindungsgemäße Vorrichtung hat den Vorteil, daß durch das Vorsehen der Verbindungsleitung ein Heraustropfen von Proben- bzw. Dosierflüssigkeit aus der Ansaugkapillare vermieden wird. Dieses Verfahren funktioniert unabhängig von Schwankungen in der Förderleistung der Pumpe.

Durch das Vorsehen der Verbindungsleitung besteht eine durchgehende Verbindung von den Behältern mit Kalibrierflüssigkeit über die Elektrodeneinheit zum Abfallbehälter. Die Spülflüssigkeit kann somit auf einfache Weise durch den Durchflußkanal der Elektrodeneinheit gepumpt werden, ohne daß beim Spülvorgang die Fließrichtung geändert werden muß, wie es beim Stand der Technik der Fall war. Damit ist eine schnellere und intensivere Reinigung des Elektrodenkanals möglich.

Ein weiterer Vorteil besteht darin, daß die Dosierzeiten verkürzt werden. Beim Stand der Technik mußte nämlich der Dosiervorgang genau dann beendet werden, wenn der Durchflußkanal mit der Kalibrierflüssigkeit gefüllt ist. Dies ist jetzt nicht mehr erforderlich, da überschüssige Kalibrierflüssigkeit in der Verbindungsleitung eindringt und nicht mehr aus der Kapillare austritt.

Die im Stand der Technik hinter der Förderpumpe vorgesehene Lichtschranke in der Dosierleitung kann jetzt entfallen, da deren Aufgabe jetzt von den Sensoren an den beiden Ausgängen der Elektrodeneinheit übernommen wird.

Die Zeichnung zeigt in
Figur 1 eine erste Ausführungsform in einer Prinzipskizze und in
Figur 2 eine zweite Ausführungsform in einer weiteren Prinzipskizze.

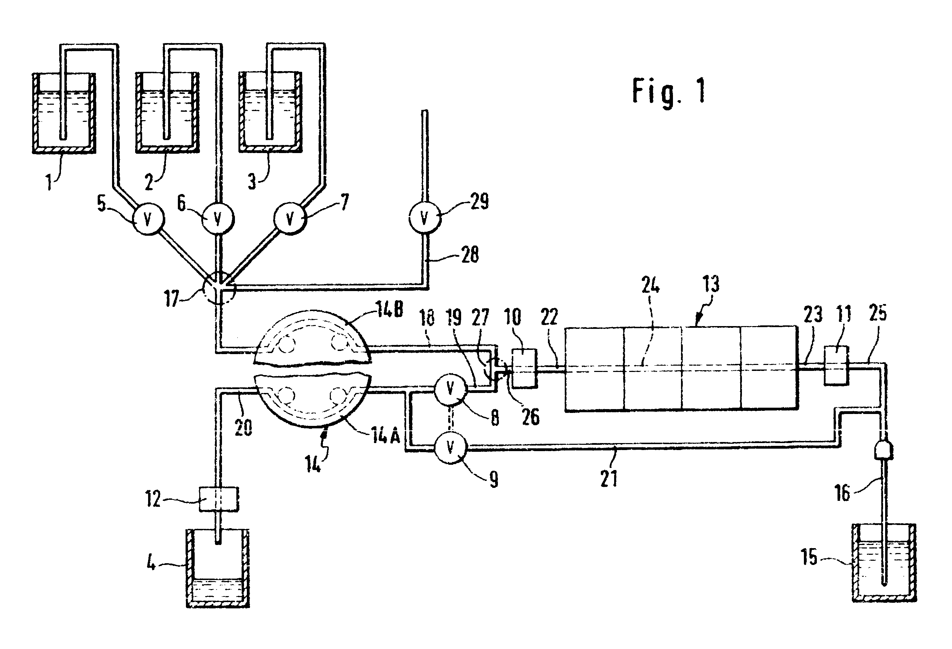

Die Figur 1 zeigt eine Elektrodeneinheit 13, die von einem Durchflußkanal 24 durchsetzt ist. Der Durchflußkanal 24 weist zwei Endbereiche 22, 23 auf, die jeweils mit den Leitungen 26 bzw. 25 verbunden sind. Die Leitung 25 dient als Probenzuführungsleitung und ist mit der Kapillare 16 verbunden, die in den Probenbehälter 15 eintaucht.

Die Leitung 18, 26 ist die Dosierleitung für die Zuführung der Kalibrierflüssigkeiten in den Durchflußkanal 24. Diese Dosierleitung 18, 26 ist über den Verzweigungspunkt 27 und den Verzweigungspunkt 17 mit den einzelnen Kalibrierflüssigkeitsbehältern 1, 2 und 3 verbunden. In der Leitung 18 befindet sich eine Pumpe 14, die vorteilhafterweise als peristaltische Rollenschlauchpumpe ausgebildet ist. In der hier gezeigten Ausführungsform dient die Pumpe 14 zum Zuführen von Kalibrierflüssigkeit in der Leitung 18 und gleichzeitig zum Abpumpen von Flüssigkeit durch die Leitung 19, 20, die mit dem Abfallbehälter 4 in Verbindung steht. Die Leitung 20 bildet zusammen mit der Leitung 19 die Abflußleitung, die über die Verbindungsleitung 21 mit der Probenzuführungsleitung 25 in Verbindung steht. Diese Leitung ist über die Kapillare 16 offen.

In der Abflußleitung 19 ist ein Ventil 8 und in der Verbindungsleitung ein Ventil 9 vorgesehen. Beide Ventile können zusammengelegt werden und als kombiniertes Ventil mit Schließer und Öffner derart ausgebildet sein, daß immer eine Leitung geöffnet und die andere Leitung geschlossen ist. Dies ist durch die gestrichelte Linie in der Figur angedeutet.

Um den Füllzustand der Leitung zu überwachen, sind Sensoren 10, 11 und 12 vorgesehen.

Für die Messung der Probenflüssigkeit wird die Probe aus dem Behälter 15 über die Kapillare 16 mit Hilfe der Pumpe 14 angesaugt. Zunächst ist das Ventil 8 geschlossen und das Ventil 9 geöffnet. Dadurch wird zunächst Probenflüssigkeit in die Leitung 21 gepumpt, wobei die Kapillare 16 gespült wird. Anschließend wird Ventil 9 geschlossen und Ventil 8 geöffnet. Die Probenflüssigkeit wird dann bis zum Verzweigungspunkt 27 angesaugt, wobei die Sensoren 10 und 11 die korrekte Füllung des Durchflußkanals 24 überwachen. Erreicht die Flüssigkeitssäule den Sensor 10, so wird die Pumpe noch für ein bestimmtes Zeitintervall weiterbetätigt, um sicherzustellen, daß Rückstände der Kalibrierlösungen im Durchflußkanal 24 völlig aus dem Meßbereich in die Abflußleitung 19 entfernt sind.

Hierauf erfolgt die Messung der gewünschten Parameter, wobei die Pumpe 14 zu diesem Zweck von einer nicht gezeigten Steuervorrichtung stillgesetzt wird.

Nach Abschluß der Messung der gewünschten Parameter wird die Pumpe 14 so lange bei geöffnetem Ventil 8 in Betrieb genommen, bis die Probe vollständig durch die Abflußleitung 19, 20 in den Abfallbehälter 4 gepumpt worden ist.

Hieran schließt sich der Spülvorgang der Elektrodeneinheit an, der mit einer in einem der Behälter 1, 2 oder 3 befindlichen Kalibrierflüssigkeit bzw. Luft, die durch die Belüftungsleitung 28 zuführbar ist, durchgeführt wird.

Hierzu wird das entsprechende Ventil 5, 6 oder 7 bzw. 29 geöffnet und die Kalibrierflüssigkeit bzw. Luft über die Leitung 18 und 26 dem Durchflußkanal 24 zugeführt. Zu diesem Zweck ist das Ventil 8 geschlossen und das Ventil 9 geöffnet. Die Kalibrierflüssigkeit bzw. Luft gelangt von dem Durchflußkanal 24 über die Probenzuführungsleitung 25 und den Kapillaradapter der Kapillare 16, der auf diese Weise ebenfalls mitgespült, in die Verbindungsleitung 21 und wird dann über die Leitung 20 in den Behälter 4 direkt abgepumpt. Infolge der unterschiedlichen Pumpwirkung der Pumpe 14 in der Abfalleitung 20, was durch einen unterschiedlichen Querschnitt im Vergleich zuzr Dosierleitung 18 bewirkt wird, entsteht innerhalb des Kapillaradapters und der Kapillare 16 ein Unterdruck, so daß aus der Kapillare eventuell austretende Flüssigkeit sofort abgepumpt wird. Der Spülvorgang kann noch dadurch verbessert werden, daß zwischendurch Luftsegmente in die Leitung 18 eingeführt werden. Hierzu ist am Verzweigungspunkt 17 eine weitere Leitung mit einem Luftventil vorzusehen (nicht gezeigt). Nach dem Spülvorgang wird das Ventil 9 geschlossen und das Ventil 8 geöffnet. Zwar wird dann über die Leitung 18 weiterhin Kalibrierflüssigkeit gefördert, aber durch die Wirkung des zweiten Pumpsegmentes in der Leitung 20 wird gleichzeitig die Kalibrierflüssigkeit wieder abgesaugt, was zu einem Unterdruck in dem Durchflußkanal 24 führt, der auf diese Weise leergepumpt wird.

Anschließend wird das Ventil 8 wieder geschlossen das Ventil 9 wieder geöffnet. Auf diese Weise wird der Elektrodeneinheit Kalibrierflüssigkeit zugeführt und zwar so lange, bis der Durchflußkanal 24 vollständig gefüllt ist. Nachdem die Sensoren 10 und 11 die korrekte Füllung des Durchflußkanals angezeigt haben, wird die Pumpe 14 stillgesetzt und die Messung der Kalibrierflüssigkeit durchgeführt. Das nachfolgende Absaugen und Spülen erfolgt auf die bereits beschriebene Art und Weise. Anschließend erfolgt ein weiterer Kalibriervorgang mit einer zweiten Kalibrierflüssigkeit. Danach kann eine weitere Probenmessung erfolgen.

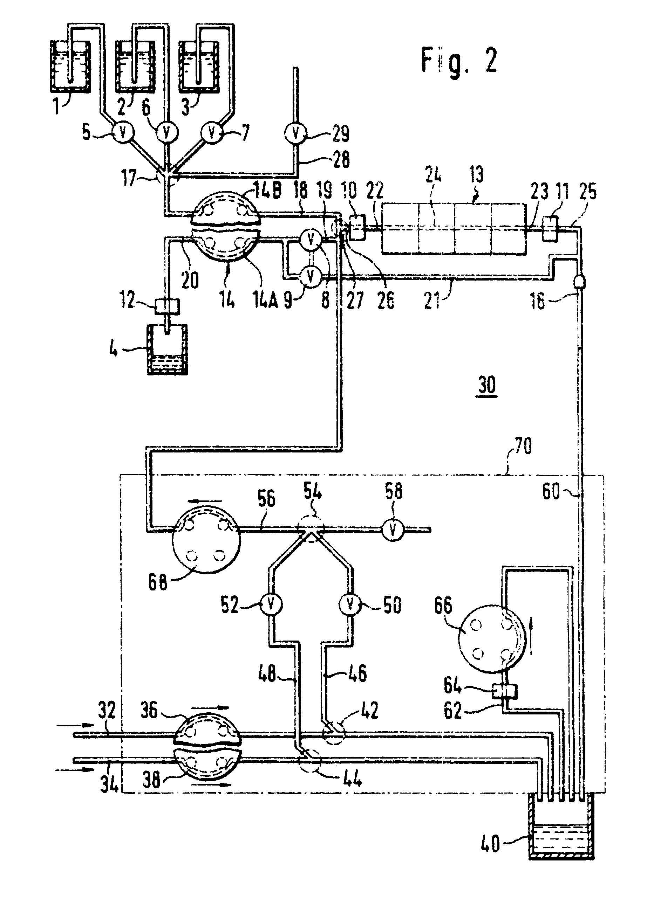

In Figur 2 ist eine zweite Ausführungsform 30 des erfindungsgemäßen Meßgerätes gezeigt, wobei für gleiche Teile die gleichen Bezugszeichen wie bei der Meßvorrichtung gemäß Figur 1 verwendet werden. Mit dieser Meßvorrichtung 30 soll ein quasi kontinuierliches Meßverfahren durchgeführt werden.

Hierzu ist eine erste Probenleitung 32 und eine zweite Probenleitung 34, in die jeweils eine Pumpe 36 und 38 eingeschaltet ist, zunächst mit einem Abfallbehälter 40 verbunden. Stromab der Pumpen 36 und 38 gehen von der ersten Probenleitung 32 bzw. von der zweiten Probenleitung 34 an den Verzweigungspunkten 42 bzw. 44 eine erste und eine zweite Verzweigungsleitung 46 bzw. 48 ab, in die jeweils ein Absperrorgan 50 bzw. 52 eingeschaltet ist. Stromab der Ventile 50 und 52 münden die Verzweigungsleitungen 46 und 48 an einem Verbindungspunkt 54 in eine Förderleitung 56, deren eines Ende in die Leitung 19 stromauf des Ventils 8 mündet und deren anderes Ende mit einem weiteren Ventil 58 versehen ist.

Wie aus Figur 2 ersichtlich münden außer den beiden Probenleitungen 32 und 34 auch eine Luftleitung 60, die mit der Kapillaren 16 verbunden ist in den Abfallbehälter 40. Schließlich ist noch eine Füllstandsleitung 62 vorgesehen, die in eine Schleife derart gelegt ist, daß beide Enden in den Abfallbehälter münden, so daß mit Hilfe des Füllstandsdetektors 64 bei eingeschalteter Pumpe 66, die in die Füllstandsleitung 62 eingeschaltet ist, der Füllstand des Abfallbehälters 40 gemessen werden kann.

Des weiteren ist stromab des Verbindungspunktes 54 in die Förderleitung 56 eine Förderpumpe 68 eingeschaltet, die im Betrieb ein kleineres Fördervolumen aufweist, als die Probenzuführungspumpen 36 bzw. 38.

Wie aus Figur 2 ersichtlich ist, sind nur beispielhaft zwei Förderleitungen 32 und 34 und damit verbundene Pumpen 36 und 38, Verzweigungspumpen 42 und 44, Verzweigungsleitungen 46 und 48 und Ventile 50 und 52 gezeigt. Erfindungsgemäß können auch eine Mehrzahl von Leitungen vorgesehen sein oder aber auch nur eine einzige Zuführungsleitung.

Des weiteren ist es vorteilhaft, daß, wie dies strichliert in Figur 2 gezeigt ist, sämtliche Leitungen, die mit den Pumpen 36, 38, 66 und 68 verbunden sind, in einer Kassette 70 aufgenommen sind, so daß sich hierdurch die Plazierung der gesamten Leitungssysteme in den auf einer festen, nicht gezeigten Montageplatte angeordneten Pumpen 36, 38, 66 und 68 leicht vornehmen läßt.

Eine ähnliche Vorrichtung, wie in Figur 2 gezeigt, ist in der EP-A- 166 920 dargestellt, auf deren Offenbarung Bezug genommen wird.

Mit der in Figur 2 gezeigten Meßvorrichtung 30 wird das quasi kontinuierliche Meßverfahren folgendermaßen durchgeführt:

Die Probe wird über eine der beiden Probenleitungen 32 oder 34 kontinuierlich mit Hilfe der Pumpen 36 und 38 in den Abfallbehälter 40 gefördert. Zur Messung einer Probe, beispielsweise der in der Leitung 32 geförderten Probe, wird das Ventil 50 geöffnet, wobei durch die Wirkung der Pumpe 68 bei geschlossenem Ventil 8 die Probe in den Elektrodenblock 13 solange gefördert wird, bis die Elektroden 10 und 11 ein Detektionssignal abgegeben haben. Danach wird die Pumpe 68 abgeschaltet.

Der erste, eventuell verunreinigte Teil der Probe kann vorher durch kurzes Einschalten der Pumpe 14 und Öffnen der Ventile 8 bzw. 9 zunächst in den Abfallbehälter 4 gefördert werden.

Danach wird die Probe im Elektrodenblock 13 durch Einschalten der Pumpe 14 und Öffnen der Ventile 8 und 9 abgepumpt. Somit dient also das erste Dosieren der Probe zum Spülen des Elektrodenblocks.

Danach wird erneut die Probe - wie vorstehend beschrieben - in den Elektrodenblock dosiert, woraufhin die Messung erfolgt. Anschließend wird die Probe mit Hilfe der Pumpe 14 in den Abfallbehälter 4 befördert, wie dies ebenfalls vorstehend beschrieben ist.

Hierauf erfolgt die ebenfalls vorstehend beschriebene Kalibrierung mit entsprechenden Kalibrierlösungen.

In einer weiteren Ausführungsform kann die Förderleitung 56 leergepumpt werden, wobei das Belüftungsventil 58 geöffnet und die Förderpumpe 68 im Betrieb sind. Zugleich ist die Pumpe 14 betätigt und das Ventil 8 geöffnet.

Je nach eingestellter Meßfrequenz wird eine entsprechende Zeit gewartet, wobei der Meßkanal leer ist. Während dieser Zeit werden die Probenpumpen 36 und 38 auf eine niedrige Geschwindigkeit gestellt und die Ventile 50 und 52 geschlossen sowie die Pumpe 68 außer Betrieb gesetzt. Bevor für die nächste Messung Proben in den Elektrodenblock gepumpt werden, werden die Pumpen 36 und 38 vorteilhafterweise auf eine höhere Pumpgeschwindigkeit geschaltet, so daß aktuelle Probe zur Verfügung steht.

Der Belüftungsschlauch 60 der Kapillare 16 ist im übrigen nur aus Sicherheitsgründen vorhanden und kann gegebenenfalls entfallen, insbesondere dann, wenn über die Kapillare 16 eine Einzelprobe manuell eingegeben werden soll, so daß die Ausführungsform gemäß Figur 1 betätigt wird. In jedem Fall soll die Luftleitung 60 luftgefüllt sein, so daß der Meßkanal nicht durch Druckschwankungen beeinflußt wird. Hierdurch sind die Elektroden 13 während der Messung drucklos.

Nach jeder quasi kontinuierlichen Messung kann - wie erläutert - eine Kalibrierung vorgenommen werden. Schließlich findet keine Erwärmung des Elektrodenblocks 13 durch die Probe statt, da zwischen den Messungen eine längere Zeitspanne vorliegt, innerhalb der der Meßkanal leer bleibt.

## Patentansprüche

1. Meßvorrichtung zur Bestimmung der Aktivität oder der Konzentration von Ionen in Lösungen, mit wenigstens einer Meßelektrode und einer Referenzelektrode, die mit einem Durchflußkanal miteinander verbunden sind, der einen ersten Ausgang und einen zweiten Ausgang aufweist, der durch eine Dosierleitung, in die eine erste Pumpe und wenigstens ein Ventil eingeschaltet sind, mit wenigstens einem Kalibrierlösungsbehälter verbunden ist, wobei von der Dosierleitung zwischen der ersten Pumpe und dem Durchflußkanal eine Abflußleitung abzweigt, in die eine zweite Pumpe eingeschaltet ist sowie mit einer mit dem Durchflußkanal verbundenen Probenzuführungsleitung, dadurch gekennzeichnet, daß von der Abflußleitung (19) vor der zweiten Pumpe (14) eine Verbindungsleitung (21) abzweigt, die im Bereich des ersten Ausgangs (23) in den Durchflußkanal (24) mündet, und daß in dieser Verbindungsleitung (21) ein erstes Ventil (9) und in der Abflußleitung (19) zwischen dem Verzweigungspunkt (27) und der Abzweigung der Verbindungsleitung (21) ein zweites Ventil (8) vorgesehen sind.

2. Meßvorrichtung nach Anspruch 1, dadurch gekennzeichnet, daß der erste Ausgang (23) des Durchflußkanals (24) mit der Probenzuführungsleitung (25) verbunden ist, deren Ende mit einer Kapillaren (16) versehen ist und in die Probenzuführungsleitung (25) mündet.

3. Meßvorrichtung nach Anspruch 2 oder 3, dadurch gekennzeichnet, daß die Ventile (8, 9) als ein kombiniertes Ventil ausgeführt sind und gegengetaktet in die Offen- und Geschlossen-Stellung überführbar sind.

4. Meßvorrichtung nach einem der Ansprüche 1 bis 3, dadurch gekennzeichnet, daß die Probenzuführungsleitung (25) und die Verbindungsleitung (21) gemeinsam in die Kapillare (16) münden.

5. Meßvorrichtung nach Anspruch 1, dadurch gekennzeichnet, daß die Leitung (19) über eine Förderleitung (56) und wenigstens eine Verzweigungsleitung (46, 48) über wenigstens einen Verzweigungspunkt (42, 44) mit wenigstens einer Probenleitung (32, 34) verbunden ist, in die wenigstens eine Pumpe (36, 38) eingeschaltet ist und deren Ende mit einem Abfallbehälter (40) verbunden ist, wobei in die Verbindungsleitung (56) eine Förderpumpe (68) eingeschaltet ist.

6. Meßvorrichtung nach Anspruch 5, dadurch gekennzeichnet, daß in die Verzweigungsleitung (46, 48) ein Ventil (50, 52) eingeschaltet ist, das im Förderzustand geöffnet ist.

7. Meßvorrichtung nach Anspruch 5 oder 6, dadurch gekennzeichnet, daß das Ende der Förderleitung (56) mit einem Belüftungsventil (58) versehen ist, das beim Belüften geöffnet ist.

8. Meßvorrichtung nach einem der Ansprüche 5 bis 7, dadurch gekennzeichnet, daß der Abfallbehälter (40) mit einer Füllstandseinrichtung (62 - 66) versehen ist.

## Claims

1. A measuring device for determination of the activity or the concentration of ions in solutions having at least one measuring electrode and a reference electrode which are connected to a flow channel having a first exit and a second exit, which flow channel being connected via a dosing line into which a first pumping means and at least one valve means is interposed to at least one calibrating liquid container, whereby a discharge line branches off from said dosing line between said first pump and said flow channel, said discharge line having second pumping means and a sample feed line connected to said flow channel, characterized in that a connection line (21) branches off from said discharge line (19) before said second pump (14), said connection line exiting within the area of said first exit (23) into said flow channel (24), and that in said connection line (21) a first valve (9) and in said discharge line (19), between the branching point (27) and the junction of said connection line (21), a second valve (8) are provided.

2. A measuring device according to claim 1, characterized in that said first exit (23) of the flow channel (24) is connected with said sample feed line (25) the end of which being provided with an aspiration cannula (16) which exits into said sample feed line (25).

3. A measuring device according to claim 2 or 1, chaacterized in that said valves (8, 9) are provided as a combined valve arranged to operate in mutually opposed settings and are convertible in opposite strokes into the open and closed position.

4. A measuring device according to any of claims 1 to 3, characterized in that both said sample feed line (25) and said connection line (21) exit together into the aspiration cannula (16).

5. A measuring device according to claim 1, characterized in that said line (19) is connected via a forwarding line (56) and at least one branch line (46, 48) via at least one branch point (42, 44) with at least one sample feed line (32) into which at least one pump (36, 38) is interposed and whose end is connected with a discharge container (40), whereby into said forwarding line (56) a forwarding pump (68) is interposed.

6. A measuring device according to claim 5, characterized in that into said branch line (46, 48) a valve (50, 52) is interposed, said valve being open in the forwarding position.

7. A measuring device according to claim 5 or 6, characterized in that the end of said forwarding line (56) is provided with a clearing valve (58), said valve being open during the clearing step.

8. A measuring device according to any of claims 5 to 7, characterized in that said discharge container (40) is provided with a full level signalling means (62-66).

## Revendications

1. Dispositif de mesure pour déterminer l'activité ou la concentration d'ions dans des solutions, comportant au moins une électrode de mesure et une électrode de référence qui sont reliées entre elles par un canal de passage qui comporte une première sortie et une deuxième sortie et qui est relié par une conduite de dosage dans laquelle sont montées une première pompe et au moins une vanne, avec au moins un récipient de solution de calibrage, une conduite d'écoulement dans laquelle est montée une deuxième pompe, partant de la conduite de dosage, entre la première pompe et le canal de passage, et comportant aussi une conduite d'arrivée d'échantillons reliée au canal de passage, caractérisé en ce que de la conduite d'évacuation (19) part, avant la deuxième pompe (14), une conduite de liaison (21) qui débouche dans la région de la première sortie (23), dans le canal de passage (24) et en ce que dans cette conduite de liaison (21) il est prévu une première vanne (9) et dans la conduite d'évacuation (19), entre le point de bifurcation (27) et le départ de la conduite de liaison (21), il est prévu une deuxième vanne (8).

2. Dispositif de mesure selon la revendication 1, caractérisé en ce que la première sortie (23) du canal de passage (24) est reliée à la conduite d'arrivée d'échantillons (25) dont l'extrémité est pourvue d'un tube capillaire (16) et débouche dans la conduite d'arrivée d'échantillons (25).

3. Dispositif de mesure selon la revendication 2 ou 1, caractérisé en ce que les vannes (8, 9) sont réalisées sous la forme d'une vanne combinée et peuvent passer symétriquement dans la position ruverte et dans la position fermée.

4. Dispositif de mesure selon l'une des revendications 1 à 3, caractérisé en ce que la conduite d'arrivée d'échantillons (25) et la conduite de liaison (21) débouchent conjointement dans le tube capillaire (16).

5. Dispositif de mesure selon la revendication 1, caractérisé en ce que la conduite (19) est reliée, par une conduite de circulation (55) et au moins une conduite de bifurcation (46, 48) par au moins un point de bifurcation (42, 44), avec au moins une conduite d'échantillons (32, 34) dans laquelle est montée au moins une pompe (36, 38) et dont l'extrémité est reliée à un réservoir de déchets (40), une pompe de circulation (68) étant montée dans la conduite de liaison (56).

6. Dispositif de mesure selon la revendication 5, caractérisé en ce qu'une vanne (50, 52) qui est ouverte à l'état de circulation, est montée dans la conduite de bifurcation (46, 48).

7. Dispositif de mesure selon la revendication 5 ou 6, caractérisé en ce que l'extrémité de la conduite de circulation (56) est pourvue d'une vanne d'aération (58) qui est ouverte pendant l'aération.

8. Dispositif de mesure selon l'une des revendications 5 à 7, caractérisé en ce que le réservoir de déchets (40) est pourvu d'un dispositif de niveau de remplissage (62 à 66).

Fig. 1

Fig. 2